# EUROPÄISCHE PATENTANMELDUNG

(11) **EP 4 080 200 A1**
(43) Veröffentlichungstag der Anmeldung: **26.10.2022**
(21) Anmeldenummer: 22168781.7
(22) Anmeldetag: 19.04.2022
(51) Int. Cl.: G01N 21/88, G01N 21/90, G06T 7/00, G06T 7/579

(54) **VERFAHREN ZUR FEHLERINSPEKTION EINES DREIDIMENSIONALEN OBJEKTES**

(30) Priorität: 20.04.2021 DE 102021109998
(71) Anmelder: Heye International GmbH, 31683 Obernkirchen (DE)
(72) Erfinder: Stüwe-Michel, Hartwin, 31675 Bückeburg (DE)
(74) Vertreter: Michalski Hüttermann & Partner Patentanwälte mbB

(57) **Zusammenfassung**

Die Erfindung betrifft ein Verfahren zur Fehlerinspektion eines dreidimensionalen Objektes (1), mit folgenden Verfahrensschritten:
Rotieren des Objektes (1) um eine vorbestimmte Rotationsachse (2),
Erfassen von Bildstreifen (3) des Objektes (1) mit einer Kamera (4),
Zusammenfügen der Bildstreifen (3) zu einem zweidimensionalen Scan-Bild (6) des Objektes (1) und
Erstellen eines dreidimensionalen Scan-Bildes (7) des Objektes (1) durch Projizieren des zweidimensionalen Scan-Bildes (6) des Objektes (1) auf ein dreidimensionales Modell des Objektes (1).

Auf diese Weise wird eine einfache und verlässliche Möglichkeit geschaffen, Objektfehler (8) mittels von einem Objekt (1) erfasster Bildstreifen (3) zu erkennen und lokalisieren zu können.

## Beschreibung

Die Erfindung betrifft ein Verfahren zur Fehlerinspektion eines dreidimensionalen Objektes, insbesondere einer Glasflasche, mittels Erfassen von Bildstreifen des Objektes mit einer Kamera.

Aus der Praxis ist es bekannt, bei der Herstellung von Hohlglasbehältnissen, wie Glasflaschen, die hergestellten Behältnisse unmittelbar im Anschluss an ihre Herstellung einer optischen Prüfung auf Objektfehler zu unterziehen. Dazu kann ein hergestelltes Hohlglasbehältnis z.B. auf einem Drehteller um seine Zentralachse rotiert werden, während mittels einer Zeilenkamera fortlaufend Bildstreifen des Hohlglasbehältnisses aufgenommen werden. Diese erfassten Bildstreifen werden zu einem zweidimensionalen Scan-Bild des Objektes zusammengefügt. Im Rahmen der Erfassung der Bildstreifen werden natürlich auch Fehler des Objektes erfasst, die somit auch Niederschlag in dem zweidimensionalen Scan-Bild finden. Das zweidimensionale Scan-Bild kann somit zur Entdeckung von Objektfehlern verwendet werden, die im Rahmen der Herstellung des Objektes entstanden sind.

Eine solche zweidimensionale Abwicklung der mit der Zeilenkamera erfassten Oberfläche des Objektes kann allerdings mitunter schwierig zu interpretieren sein, insbesondere wenn die Form des Objektes von einer reinen Zylinderform abweicht, wie es bei z.B. bei Glasflaschen regelmäßig der Fall ist, da solche Glasflaschen im Allgemeinen eine Mündung und einen zur Mündung hin führenden Hals aufweisen, der gegenüber dem Rest der Glasflasche verjüngt ist. Dies Verjüngung führt dazu, dass bei der zweidimensionalen Abwicklung der mit der Zeilenkamera erfassten Oberfläche des Objektes in solchen verjüngten Bereichen des Objektes eine gewisse Dehnung erfolgt, die die Interpretierbarkeit des zweidimensionale Scan-Bild und insbesondere die Lokalisierung von Objektfehlern erschwert.

Aus der DE 10 2016 114 190 A1 sind ein Verfahren und eine Vorrichtung zur optischen Untersuchung von transparenten Körpern aus Kunststoff, Glas oder Glaskeramik bekannt. Die Untersuchung erfolgt dabei mittels einer berührungslosen Erfassung und Messung des Körpers, wobei optische Bildaufnehmer eingesetzt werden. Dabei werden von den Körpern während der Untersuchung in unterschiedlichen Positionen relativ zu dem Bildaufnehmer mehrere Einzelaufnahmen gemacht, die nachfolgend analysiert werden. Außerdem ist aus der EP 2 851 677 B1 ein Verfahren zur optischen Überprüfung eines Messobjekts bekannt, das die folgenden Verfahrensschritte aufweist: Drehen des Messobjekts um eine Drehachse und gleichzeitig wiederholtes Abtasten des Messobjekts durch einen optischen Sensor, der eine Anzahl Bildzeilen aufweist, wobei das Abtasten ein Erfassen von wenigstens zwei voneinander beabstandeten Messzeilen auf dem Messobjekt in jeweilige Bildzeilen umfasst, wobei jeder Messzeile wenigstens eine Bildzeile zugeordnet ist und als Zeilenbild erfasst wird, und jede Bildzeile das Messobjekt an einer dieser Bildzeile zugeordneten Messzeile unter einem unterschiedlichen Winkel bezüglich einer Oberfläche des Messobjekts erfasst, und Kombinieren aller Zeilenbilder, die einer Messzeile zugeordnet sind, zu einem jeweiligen zusammengesetzten Bild.

Davon ausgehend ist es die Aufgabe der Erfindung, eine einfache und verlässlich Möglichkeit zu schaffen, Objektfehler mittels von einem Objekt erfasster Bildstreifen zu erkennen und zu lokalisieren.

Diese Aufgabe wird durch den Gegenstand des Patentanspruchs 1 gelöst. Bevorzugte Weiterbildungen finden sich in den Unteransprüchen.

Erfindungsgemäß ist also ein Verfahren zur Fehlerinspektion eines dreidimensionalen Objektes vorgesehen, das folgende Verfahrensschritte aufweist:
Rotieren des Objektes um eine vorbestimmte Rotationsachse,
Erfassen von Bildstreifen des Objektes mit einer Kamera,
Zusammenfügen der Bildstreifen zu einem zweidimensionalen Scan-Bild des Obj ektes und
Erstellen eines dreidimensionalen Scan-Bildes des Objektes durch Projizieren des zweidimensionalen Scan-Bildes des Objektes auf ein dreidimensionales Modell des Objektes.

Es ist somit ein maßgeblicher Aspekt der Erfindung, dass ein dreidimensionales Scan-Bild des Objektes durch Projizieren des zweidimensionalen Scan-Bildes des Objektes auf ein dreidimensionales Modell des Objektes erfolgt. Dazu ist es freilich erforderlich, dass die dreidimensionale Außenform des Objektes bekannt ist, da diese im Rahmen der Erfassung von Bildstreifen des Objektes nicht erkannt werden kann. Das ist jedoch unproblematisch, da im Rahmen der Herstellung der Objekte deren gewünschte Form vorgegeben ist, die insofern für den Projektionsschritt hinterlegt werden kann. Auf diese Weise wird eine Darstellung des Scans erzielt, die realitätsnah ist und praktisch keine geometrischen Verzerrungen aufweist.

Unter dem Begriff "Bildstreifen" wird vorliegend einerseits ein Bild verstanden, wie es von einer Zeilenkamera aufgenommen wird, also einer Kamera, die nur eine lichtempfindliche Zeile aufweist. Andererseits wird unter dem Begriff "Bildstreifen" auch ein Bild verstanden, wie es von einer Kamera mit einem zweidimensionalen Sensor aufgenommen wird, der über eine Vielzahl von Zeilen verfügt, sofern die Breite des Bildes um wenigstens den Faktor 10 geringer ist als die Länge des Bildes. Vorzugsweise ist im Falle eines Bildstreifens, der mit einer Kamera mit einem zweidimensionalen Sensor aufgenommen worden ist, die Breite des Bildes aber um wenigstens den Faktor 100 geringer als die Länge des Bildes, ganz besonders bevorzugt um wenigstens den Faktor 250. Vorzugsweise gilt im Falle eines Bildstreifens, der mit einer Kamera mit einem zweidimensionalen Sensor aufgenommen worden ist, zusätzlich oder alternativ, dass die Breite des Bildstreifens, also die geringere Abmessung des Bildstreifens, die senkrecht zur Länge des Bildstreifens steht, maximal 25 Pixel aufweist, vorzugsweise maximal 15 Pixel und ganz besonders bevorzugt maximal 10 Pixel.

Da das durch das Projizieren erhaltene dreidimensionale Scan-Bild des Objektes ein Abbild des tatsächlichen Objektes darstellt, enthält das dreidimensionale Scan-Bild des Objektes freilich auch alle Fehler des Objektes, so dass diese in dem dreidimensionalen Scan-Bild des Objektes ebenfalls dargestellt und dort von einem Nutzer grundsätzlich erkannt werden können. Gemäß einer bevorzugten Weiterbildung der Erfindung weist das Verfahren jedoch einen zusätzlichen Schritt auf, in dem das zweidimensionale Scan-Bild des Objektes und/oder das dreidimensionale Scan-Bild des Objektes zur Erkennung von Objektfehlern automatisch analysiert wird. Zum Analysieren des zweidimensionalen Scan-Bildes des Objektes und/oder des dreidimensionalen Scan-Bildes des Objektes zur Erkennung von Objektfehlern kann auf unterschiedliche bekannte Verfahren zurückgegriffen werden. Vorzugsweise ist jedoch vorgesehen, dass das Analysieren des zweidimensionalen Scan-Bildes des Objektes und/oder des dreidimensionalen Scan-Bildes des Objektes zur Erkennung von Objektfehlern derart erfolgt, dass einerseits zwischen ohne Vergleich mit einem Referenzobjekt erfassten absorbierenden oder reflektierenden Stellen des Objektes und andererseits mittels Vergleich mit einem Referenzobjekt erfasste Abweichungen des Objektes von dem Referenzobjekt unterschieden wird.

Ein Nutzer des vorliegenden Verfahrens kann auf verschiedene Weisen über solche automatisch erkannten Objektfehler informiert werden. Gemäß einer bevorzugten Weiterbildung der Erfindung weist das Verfahren jedoch einen zusätzlichen Schritt des Kenntlichmachens erkannter Objektfehler in dem dreidimensionalen Scan-Bild des Objektes auf. Insbesondere ist es bevorzugt, im Fall von auf unterschiedliche Weisen erkannten Objektfehlern diese in dem dreidimensionalen Scan-Bild des Objektes auch auf unterschiedliche Weisen kenntlich zu machen, z.B. mittels unterschiedlicher Farben für die absorbierenden oder reflektierenden Stellen des Objektes einerseits und die mittels Vergleich mit einem Referenzobjekt erfasste Abweichungen des Objektes von dem Referenzobjekt andererseits bei der Darstellung des erfassten Objektes als dreidimensionales Scan-Bild auf einem Monitor.

Die Projektion wird vorzugsweise in einer solchen Form zur Verfügung gestellt, in der ein Nutzer die dreidimensionale Darstellung aus allen Richtungen begutachten kann. Dabei kann die jeweilige Lage der Objektfehler auf dem Objekt wichtige Hinweise geben, ob diese zufällig verteilt sind oder ein geometrisch festes Muster bilden, das z.B. aus dem Produktionsprozess stammt. Das kann man aus einer zweidimensionalen Darstellung nur schwer ableiten. Darüber hinaus gilt, dass ein Objektfehler bei einer dreidimensionalen Darstellung immer komplett abgebildet wird und nicht wie bei der zweidimensionalen Darstellung durch den Rand des zweidimensionalen Scan-Bildes geteilt sein kann. Außerdem kann man mit einer dreidimensionalen Darstellung die korrekte Positionierung der Kamera, mit der die Bildstreifen aufgenommen werden, bezüglich der Zentralachse des Objektes kontrollieren. Wenn die Nähte des Objektes nicht genau gegenüber liegen bzw. nicht parallel verlaufen, dann blickt die Kamera an der Zentralachse des Objektes vorbei bzw. ist verkippt.

Grundsätzlich wäre es denkbar, das zweidimensionale Scan-Bild des Objektes auf ein reales dreidimensionales Modell des Objektes zu projizieren. Gemäß einer bevorzugten Weiterbildung der Erfindung ist jedoch vorgesehen, dass das Projizieren des zweidimensionalen Scan-Bildes des Objektes auf das dreidimensionale Modell des Objektes im Rahmen einer Computersimulation erfolgt. Auf diese Weise kann die dreidimensionale Projektion z.B. auf einem Monitor dargestellt und dabei virtuell so bewegt werden, dass Objektfehler von allen Seiten der dreidimensionalen Darstellung von einem Nutzer erkannt werden können. Diese dreidimensionale Darstellung des Objektes macht das Auffinden der Objektfehler am realen Objekt viel einfacher als bei einer verzerrten zweidimensionalen Darstellung, wie sie aus dem Stand der Technik bekannt ist.

Für eine rudimentäre Überprüfung des Objektes auf Objektfehler kann es ausreichend sein, wenn Bildstreifen des Objektes aufgenommen werden, die voneinander beabstandet sind. Dann wird zwar nicht die gesamte der im Rahmen der Rotation der Kamera zugewandte Oberfläche des Objektes erfasst, aber zumindest in den erfassten Bereichen können Fehler festgestellt und lokalisiert werden. Allerdings ist es bevorzugt, dass die aufgenommenen Bildstreifen des Objektes einander überlappen oder direkt aneinander angrenzen. Dies ermöglicht eine vollständige Erfassung der Oberfläche des Objektes und damit auch die Erfassung möglicher Objektfehler in allen aufgenommenen Oberflächenbereichen des Objektes. Während es grundsätzlich möglich wäre, das Rotieren des Objektes schrittweise erfolgen zu lassen, z.B. mit Hilfe eines Schrittmotors, ist es bevorzugt, dass die Rotation um die vorbestimmte Rotationsachse kontinuierlich erfolgt.

Gemäß einer bevorzugten Weiterbildung der Erfindung verlaufen die erfassten Bildstreifen parallel zur Rotationsachse. Ganz besonders bevorzugt ist der Bildstreifen genau auf die Rotationsachse ausgerichtet, vorzugsweise zentral. Dies vereinfacht eine korrekte Darstellung der dreidimensionalen Projektion.

Während das vorliegend beschriebene Verfahren grundsätzlich für ganz unterschiedliche Arten von Objekten verwendbar ist, liegt eine bevorzugte Ausgestaltung des Verfahrens in einer Verwendung, bei der das Objekt transparent und hohl ist, mit einer den hohlen Bereich des Objektes nach außen hin begrenzenden Wandung, wobei die Schärfentiefe der Kamera so auf den der Kamera zugewandten Bereich der Wandung eingestellt ist, dass der der Kamera abgewandte Bereich der Wandung, also die rückwärtige Wandung, unscharf erfasst wird. Auf diese Weise ist es erreichbar, dass das unscharfe und damit verwaschene Bild der rückwärtigen Wandung praktisch mehr oder weniger im Hintergrund des Bildes verschwindet und damit bei der Auswertung des Bildes nicht stört.

Dabei ist ferner bevorzugt, dass das Objekt wenigstens abschnittsweise rotationssymmetrisch ist. Ganz besonders bevorzugt ist das untersuchte Objekt eine Glasflasche. Ferner liegt eine besonders bevorzugte Ausgestaltung darin, dass die Glasflasche eine Mündung und einen zur Mündung hinführenden Hals aufweist, wobei der Hals gegenüber dem Rest der Glasflasche verjüngt ist. Gerade die Untersuchung dieses verjüngten Halsbereichs ("neck inspection") ist bei der Flaschenherstellung von besonderer Bedeutung, da gerade dieser Bereich besonders anfällig für das Auftreten von Fehler ist.

In der Zeichnung zeigen
- Fig. 1: schematisch die Aufnahme einer Glasflasche mit einer Zeilenkamera zur Fehlerinspektion gemäß einem bevorzugten Ausführungsbeispiel der Erfindung,
- Fig. 2: ein zweidimensionales Scan-Bild gemäß einem bevorzugten Ausführungsbeispiel der Erfindung und
- Fig. 3: die Darstellung eines dreidimensionalen Scan-Bildes auf einem Monitor gemäß einem bevorzugten Ausführungsbeispiel der Erfindung.

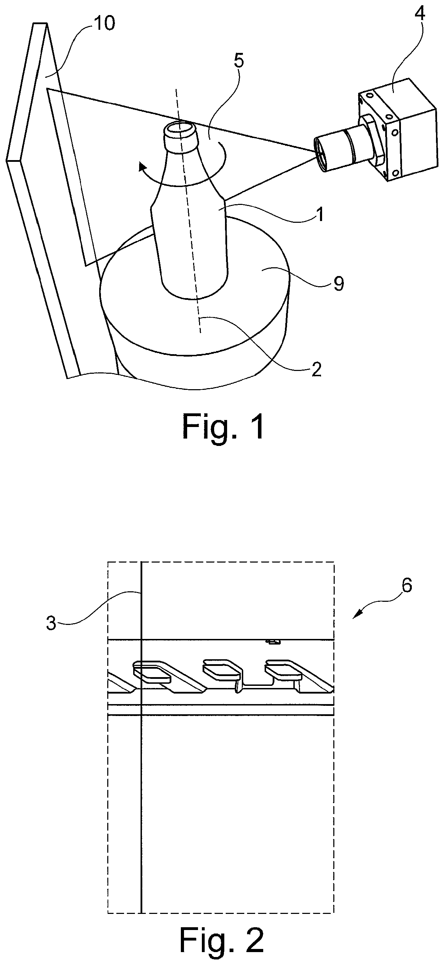

Bei dem schematisch aus Fig. 1 ersichtlichen bevorzugten Ausführungsbeispiel der Erfindung geht es vornehmlich um die Inspektion der Mündung und des Halses einer Flasche, die hier somit das Objekt 1 darstellt, für das eine Fehlerinspektion durchgeführt werden soll. Das zu inspizierende Objekt 1 steht auf einem Drehteller 9 und rotiert um seine eigene Zentralachse, die somit die Rotationsachse 2 darstellt. Während der Rotation werden von einer Zeilenkamera 4 laufend Bildstreifen 3 aufgenommen, die dann zu einem in Fig. 2 dargestellten zweidimensionalen Scan-Bild 6 zusammengesetzt werden. Exemplarisch ist in Fig. 2 ein solcher Bildstreifen 3 gekennzeichnet. Erkennbar bedarf es der Aufnahme einer Vielzahl von Bildstreifen 3, um den gesamten Umfang des Objektes 1 zu erfassen.

Der Zeilenstrahl 5 der Zeilenkamera 4 blickt von oben nach unten axial durch das Objekt 1. Dazu ist die Zeilenkamera 4 derart relativ zu dem auf dem Drehteller 9 positioniertem Objekt 1 angeordnet, dass die erfassten Bildstreifen 3 parallel zur Rotationsachse 2 verlaufen, wobei der jeweils zu erfassende Bildstreifen 3 genau auf die Rotationsachse 2 ausgerichtet ist. Eine Hintergrundbeleuchtung 10 ist auf der der Zeilenkamera 4 abgewandten Seite des Objektes 1 angeordnet und sorgt für ausreichend Licht für die Aufnahme des Objektes 1. Die Aufnahmefrequenz der Zeilenkamera 4 und die Drehgeschwindigkeit des Drehtellers 9 sind so aufeinander abgestimmt, dass die jeweils aufeinanderfolgenden Bildstreifen 3 genau aneinander angrenzen, so dass in kürzester Zeit die gesamte interessierende Umfangsfläche des Objektes 1 mittels der Zeilenkamera 4 erfasst werden kann.

Die Schärfentiefe der Optik der Zeilenkamera 4 ist auf die vordere Wand des Objektes 1 eingestellt. Obwohl die Zeilenkamera 4 durch beide Wände des Objektes 1 blickt, zeichnet sie somit nur von der vorderen Wand scharfe Bilder auf. Das unscharfe und damit verwaschene Bild der rückwärtigen Wand des Objektes 1 verschwindet mehr oder weniger im Hintergrund des Bildes.

Nachdem die Bildstreifen 3, wie in Fig. 2 dargestellt, zu einem zweidimensionalen Scan-Bild 6 des Objektes 1 zusammengefügt worden sind, wird durch Projizieren des zweidimensionalen Scan-Bildes 6 des Objektes 1 auf ein dreidimensionales Modell des Objektes 1 ein dreidimensionales Scan-Bild 7 des Objektes 1 erstellt. Dieses Projizieren des zweidimensionalen Scan-Bildes 6 des Objektes 1 auf das dreidimensionale Modell des Objektes 1 erfolgt gemäß dem hier beschriebenen bevorzugten Ausführungsbeispiel der Erfindung im Rahmen einer Computersimulation.

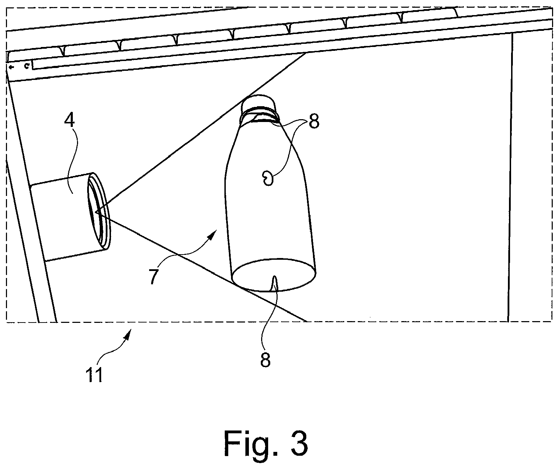

Ebenfalls im Rahmen dieser Computersimulation wird vorab das zweidimensionalen Scan-Bild 6 des Objektes 1 zur Erkennung von Objektfehlern 8 analysiert. Dies erfolgt mittels bekannter Algorithmen zur Fehlererkennung, wobei das Analysieren des zweidimensionalen Scan-Bildes 6 des Objektes 1 zur Erkennung von Objektfehlern 8 auf zwei verschiedene Weisen erfolgt:
Zum einen wird geprüft, ob das Objekt 1 absorbierende oder reflektierende Stellen aufweist, wozu kein Vergleich mit einem Referenzobjekt für das Objekt 1 erforderlich ist. Vielmehr wird dazu geprüft, ob die Struktur des Objektes 1 gleichmäßig ist oder aber Unregelmäßigkeiten aufweist, die dann als Objektfehler 8 gekennzeichnet werden können. Darüber hinaus erfolgt auch ein Vergleich mit einem Referenzobj ekt für das Objekt 1, so dass auch Abweichungen des erfassten Objektes 1 von dem Referenzobjekt erfasst und als Objektfehler 8 gekennzeichnet werden können. Grundsätzlich ist es möglich, diese auf verschiedene Weisen erfassten Objektfehler 8 unterschiedlich zu kennzeichnen, bei der Darstellung des dreidimensionalen Scan-Bildes 7 auf einem Monitor 11, wie schematisch in Fig. 3 gezeigt, z.B. mit verschiedenen Farben.

Fig. 3 zeigt eine Darstellung des dreidimensionalen Scan-Bildes 7 auf dem Monitor 11. In der Darstellung des dreidimensionalen Scan-Bildes 7 auf dem Monitor 11 sind Objektfehler 8 farblich kenntlich gemacht. Auf dem Monitor 11 sind vorliegend auch Teile der Zeilenkamera 4 und ihr Scanbereich zu sehen. Das ist freilich für die Erfindung nicht unbedingt notwendig. Die Darstellung des dreidimensionalen Scan-Bildes 7 auf dem Monitor 11 kann interaktiv in Echtzeit in alle Richtungen gedreht und gezoomt werden. Die Lage von Objektfehlern 8 kann so leicht erfasst und interpretiert werden.

### Bezugszeichenliste

- 1: Objekt
- 2: Rotationsachse
- 3: Bildstreifen
- 4: Kamera
- 5: Zeilenstrahl
- 6: zweidimensionales Scan-Bild des Objektes
- 7: dreidimensionales Scan-Bild des Objektes
- 8: Objektfehler
- 9: Drehteller
- 10: Hintergrundbeleuchtung
- 11: Monitor

## Patentansprüche

1. Verfahren zur Fehlerinspektion eines dreidimensionalen Objektes (1), mit folgenden Verfahrensschritten:
Rotieren des Objektes (1) um eine vorbestimmte Rotationsachse (2),
Erfassen von Bildstreifen (3) des Objektes (1) mit einer Kamera (4),
Zusammenfügen der Bildstreifen (3) zu einem zweidimensionalen Scan-Bild (6) des Objektes (1) und
Erstellen eines dreidimensionalen Scan-Bildes (7) des Objektes (1) durch Projizieren des zweidimensionalen Scan-Bildes (6) des Objektes (1) auf ein dreidimensionales Modell des Objektes (1).

2. Verfahren nach Anspruch 1, mit folgendem zusätzlichen Verfahrensschritt:
Analysieren des zweidimensionalen Scan-Bildes (6) des Objektes (1) und/oder des dreidimensionalen Scan-Bildes (7) des Objektes (1) zur automatischen Erkennung von Objektfehlern (8).

3. Verfahren nach Anspruch 2, mit folgendem zusätzlichen Verfahrensschritt:
Kenntlichmachen erkannter Objektfehler (8) in dem dreidimensionalen Scan-Bild (7) des Objektes (1).

4. Verfahren nach einem der vorhergehenden Ansprüche, wobei das Projizieren des zweidimensionalen Scan-Bildes (6) des Objektes (1) auf das dreidimensionale Modell des Objektes (1) im Rahmen einer Computersimulation erfolgt.

5. Verfahren nach einem der vorhergehenden Ansprüche, wobei die Bildstreifen (3) des Objektes (1) einander überlappen oder direkt aneinander angrenzen.

6. Verfahren nach einem der vorhergehenden Ansprüche, wobei die erfassten Bildstreifen (3) parallel zur Rotationsachse (2) verlaufen.

7. Verfahren nach Anspruch 4, wobei die Bildstreifen (3) genau auf die Rotationsachse (2) ausgerichtet sind.

8. Verfahren nach einem der vorhergehenden Ansprüche, wobei das Objekt (1) transparent und hohl ist, mit einer den hohlen Bereich des Objektes (1) nach außen hin begrenzenden Wandung, und die Schärfentiefe der Kamera (4) so auf den der Kamera (4) zugewandten Bereich der Wandung eingestellt ist, dass der der Kamera (4) abgewandte Bereich der Wandung unscharf erfasst wird.

9. Verfahren nach einem der vorhergehenden Ansprüche, wobei das Analysieren des zweidimensionalen Scan-Bildes (6) des Objektes (1) und/oder des dreidimensionalen Scan-Bildes (7) des Objektes (1) zur Erkennung von Objektfehlern (8) derart erfolgt, dass zwischen ohne Vergleich mit einem Referenzobjekt erfasste absorbierende oder reflektierende Stellen des Objektes (1) und mittels Vergleich mit einem Referenzobjekt erfasste Abweichungen des Objektes (1) von dem Referenzobjekt unterschieden wird und die auf diese Weise erkannten Objektfehler (8) in dem dreidimensionalen Scan-Bild (7) des Objektes (1) auf unterschiedliche Weise kenntlich gemacht werden.

10. Verfahren nach einem der vorhergehenden Ansprüche, wobei das Rotieren des Objektes (1) um die vorbestimmte Rotationsachse (2) kontinuierlich erfolgt.
